(19) **Europäisches Patentamt / European Patent Office / Office européen des brevets**

(11) **EP 3 639 666 B1**

(12) # EUROPEAN PATENT SPECIFICATION

(45) Date of publication and mention
of the grant of the patent:
**17.12.2025   Bulletin 2025/51**

(21) Application number: **19202718.3**

(22) Date of filing: **11.10.2019**

(51) International Patent Classification (IPC):
*A01P 7/02* *(2006.01)*       *A01P 7/04* *(2006.01)*
*A01N 57/12* *(2006.01)*     *A01N 25/12* *(2006.01)*
*A01N 37/04* *(2006.01)*     *A01N 43/90* *(2006.01)*
*A01P 7/00* *(2006.01)*

(52) Cooperative Patent Classification (CPC):
(C-Sets available)
**A01N 57/12; A01P 7/02; A01P 7/04**       (Cont.)

(54) **USE OF LECITHINS AS A BIOCIDE AGAINST ARTHROPODS**

VERWENDUNG VON LECITHINEN ALS BIOZID GEGEN ARTHROPODEN

UTILISATION DE LÉCITHINES COMME BIOCIDE CONTRE LES ARTHROPODES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **16.10.2018   ES 201830996**

(43) Date of publication of application:
**22.04.2020   Bulletin 2020/17**

(73) Proprietors:
• **Martin Bretones, Germán**
  **04738 Vicar (ES)**
• **Ortega Carrasco, Javier Carlos**
  **04720 Aguadulce (ES)**
• **Fernandez Aguilera, Juan Antonio**
  **04700 El Ejido (ES)**

(72) Inventors:
• **MARTÍN BRETONES, Germán**
  **04738 Vícar (ES)**
• **FERNÁNDEZ AGUILERA, Juan Antonio**
  **04700 El Ejido (ES)**

(74) Representative: **Cueto, Sénida**
  **C/ Los Madroños 23**
  **Velilla de San Antonio**
  **28891 Madrid (ES)**

(56) References cited:
**WO-A1-2016/070091       WO-A1-2018/231567
CN-A- 1 861 592       US-A- 4 411 813
US-A1- 2009 285 937**

• **ANONYMOUS: "Soya Lecithin Powder - Giiava",
1 April 2017 (2017-04-01), XP055649769,
Retrieved from the Internet <URL:https://web.
archive.org/web/20170401020403/http://giiava.
com/soya-lecithin-powder> [retrieved on
20191205]**
• **ANONYMOUS: "GIIOFINE-P-GM", 1 April 2017
(2017-04-01), XP055649771, Retrieved from the
Internet <URL:http://giiava.com/wp-content/
uploads/2017/03/GIIOFINE_P_GM.pdf> [retrieved
on 20191205]**
• **ANONYMOUS: "Sunflower Lecithin Powder -
Giiava", 1 April 2017 (2017-04-01), XP055649894,
Retrieved from the Internet <URL:https://web.
archive.org/web/20170401020514/http://giiava.
com:80/sunflower-lecithin-powder/> [retrieved
on 20191205]**
• **ANONYMOUS: "GIIOFINE-P-SF", 1 April 2017
(2017-04-01), XP055649895, Retrieved from the
Internet <URL:http://giiava.com/wp-content/
uploads/2017/03/GIIOFINE_P_SF.pdf> [retrieved
on 20191205]**
• **WENDEL ARMIN: "Lecithin", 4 December 2000
(2000-12-04), pages 1 - 9, XP002512120,
Retrieved from the Internet <URL:http://mrw.
interscience.wiley.com/emrw/9780471238966/
kirk/article/leciwend.a01/current/pdf> [retrieved
on 1077], DOI: 10.1002/
0471238961.1205030923051404.A01**

EP 3 639 666 B1

- **SOLENOPSIS SAEVISSIMA ET AL: "PHAGOSTIMULANTS FOR THE IMPORTED FIRE ANT", 1 January 1967 (1967-01-01), pages 1729, XP055650509, Retrieved from the Internet <URL:https://www.sciencedirect.com/science/article/pii/0022191067901679?via%3Dihub> [retrieved on 20191206]**
- **TOMISLAV S. CURKOVIC: "Detergents and Soaps as Tools for IPM in Agriculture | IntechOpen", 31 August 2016 (2016-08-31), XP055650477, Retrieved from the Internet <URL:https://www.intechopen.com/books/integrated-pest-management-ipm-environmentally-sound-pest-management/detergents-and-soaps-as-tools-for-ipm-in-agriculture> [retrieved on 20191206]**
- **JASON LOGSDON NAME: "How to Use Soy Lecithin", 1 January 2016 (2016-01-01), pages 1 - 19, XP093178375, Retrieved from the Internet <URL:https://www.amazingfoodmadeeasy.com/info/modernist-ingredients/more/soy-lecithin> [retrieved on 20240624]**
- **LOGSDON JASON: "Xanthan Strengthened Maple Vinaigrette Recipe", 28 December 2012 (2012-12-28), pages 1 - 14, XP093178380, Retrieved from the Internet <URL:https://www.amazingfoodmadeeasy.com/info/modernist-recipes/more/xanthan-strengthened-maple-vinaigrette-recipe> [retrieved on 20240624]**

(52) Cooperative Patent Classification (CPC): (Cont.)

C-Sets
**A01N 57/12, A01N 25/12, A01N 37/04, A01N 43/90**

## Description

### FIELD OF THE INVENTION

This invention is part of the agro-food sector. It refers to the non-therapeutic use of lecithins as substances capable of negatively affect the integrity of arthropod species, more specifically, capable of acting as insecticides and/or acaricides.

### BACKGROUND OF THE INVENTION

Lecithin, in one of its most accepted meanings, is defined as a product of natural origin comprising a complex mixture of acetone-insoluble phosphatides such as phosphatidylcholine, fostatidylethanolamine and phosphatidylinositol, combined with other substances such as triglycerides, fatty acids, carbohydrates and other minority components (Food Chemical Codex 2003) (ref. 1). The commercial term "lecithin" is very broad and describes a mixture of polar lipids obtained by a degumming process, with water, of vegetable or animal crude oils and the subsequent drying of hydrated lecithins (gums).

Lecithins can be of both, animal and plant origin. Animal sources of lecithin include eggs, milk, and body tissues such as the brain and liver. Vegetable lecithins can be extracted from species such as soy, cotton, rapeseed, sunflower, peanuts and corn.

The following table shows the fundamental phospholipidic composition of some of the main types of "deoiled" lecithins according to their origin (ref. 2):

Table 1. Composition of commercial lecithins (%).

| Lecithin | Soy | Corn | Sunflower | Rapeseed | Egg | Bovine brain |
|---|---|---|---|---|---|---|
| Phosphatidylcholine | 21 | 31 | 14 | 37 | 69 | 18 |
| Phosphatidylethanolamine | 22 | 3 | 24 | 29 | 24 | 36 |
| Phosphatidylinositol | 19 | 16 | 13 | 14 | - | 2 |
| Phosphatidic acid | 10 | 9 | 7 | - | - | 2 |
| Phosphatidylserine | 1 | 1 | - | - | 3 | 18 |
| Sphingomyelin | - | - | - | - | 1 | 15 |
| glycolipids | 12 | 30 | - | 20 | - | - |

A classification list of lecithins has been drawn up according to its industrial processing (ref. 3):

    I. **Commercial raw lecithin:** these lecithins are subdivided according to their consistency, depending on whether they are *fluid* or *plastic.*
    II. **Composed lecithins:** they consist of mixtures of products.
    III. **Chemically modified lecithins:** lecithins modified by hydroxylation, hydrogenation, acetylation, etc.
    IV. **Refined lecithins:** including "deoiled", "fractionated" and "purified" lecithins.

The different degrees of refinement mean that lecithins may contain the components mentioned in the above-mentioned definition by Food Chemical Codex in variable proportions depending on the type of fractionation used.

The term "deoiled lecithin" refers to lecithin in powder or granules, both solid. The term "soluble powder" refers to a type of product format to use in agriculture.

In its "deoiled" form most triglycerides and fatty acids are removed and the final product contains 90% or more of phosphatides (phospholipids). The consistency of the "natural" and refined grades of lecithins can vary from plastic to fluid, depending on the content of free fatty acids and oil, and the presence or absence of other diluents.

Concentrated formulates of commercial crude lecithin are available on the agro-food sector (ref. 4). These are suspensions of crude lecithins dissolved, or not, in oils with a maximum phosphatide content of 65 % weight/volume (w/v). The use of these suspensions of commercial concentrated lecithins is indicated or described as compounds with fungicidal or adjuvant activity.

To date, although there are abundant written references regarding the use of soy lecithin as a fungicide or fungistatic agent, no description of lecithins as substances capable of acting or adversely affecting the development of insects or mites has been found.

In order to have in a liquid composition, ready for application, a concentration of lecithin sufficient for its effective use against arthropods, starting from raw or composed lecithins, it would be necessary to have an emulsion quantity such that the use of these commercial raw lecithins is not economically viable for this specific use. This is not a problem of difficulty in obtaining a solution, or not, but whether the desired product contains sufficient phospholipids.

This disadvantage could be effectively overcome by using lecithin in its deoiled form: this form of lecithin processing allows its use to achieve effective working concentrations to be used as a biocide against arthropod species.

Even so, currently, there are no products in the agro-food sector that can be used to carry out phytosanitary treatments in agriculture that include lecithin in its deoiled form. There are therefore several needs in the state of the art, on the one hand, the development of new biocides with insecticide and acaricide capabilities, which are respectful with the environment, harmless to humans and respectful with biological control protocols already integrated into agricultural development, and on the other hand of lecithin compositions or products, or products containing lecithin that allow effective concentrations to be reached and that are economically viable for use in phytosanitary applications in the agricultural sector environment.

In the book "Integrated Pest Management (IPM): Environmentally Sound Pest Management" 2016, DOI:10.5772/64343, the chapter "Detergents and Soaps as Tools for IPM in Agriculture" by T. S. Tomislav describes the use of detergents and soaps as pesticides.

Surprisingly, lecithins have been found to have biocidal properties against arthropods, in particular insecticidal and acaricidal properties. It has also been found that it is possible to reach necessary concentrations of lecithin in a composition so that it can be used against arthropods, such as insects and/or mites. In addition, it has been found that it is not necessary to use a commercial raw lecithin as a starting material, which is precisely one of the reasons why it would not be economically viable to prepare effective compositions against arthropods. The present invention also solves this problem since it has been possible to prepare liquid compositions using deoiled lecithin (capable of acting as a soluble powder) as a starting product, this being an innovative aspect and an advantage with respect to the state of the art, since until now the deoiled lecithin format did not exist in the agricultural sector for the preparation of liquid compositions ready to be applied in the field.

In addition to the above-mentioned advantages, the use of inert substances in deoiled lecithin formulations - either in powder or granules - and/or additional active substances provide improvements over lecithin alone in terms of shelf life and manageability.

There are published documents related to the use of lecithin in agriculture, as well as documents disclosing liquid and solid compositions with lecithin. Some examples are mentioned below:

> Jason Logsdon Name: "How to Use Soy Lecithin", 1 January 2016 (2016-01-01), pages 1-19, XP093178375
> URL:https ://www .amazingfoodmadeeasy .corn/info/modernist-ingredients/ more/soy-lecithin
> US441 813

However none of the published documents suggests or discloses the use of lecithin against arthropods according to the claims of the present application.

## DESCRIPTION OF THE INVENTION

The term "lecithins" refers to lecithin in general, whatever its origin and in whatever form. For example, the types of lecithin that have been mentioned and defined above: raw, compound, modified, refined.

In this specification, and as indicated in the background section of the invention, the term "deoiled" refers to a type of refined lecithin, namely lecithin which has undergone a deoiling process and which may be "lecithin powder" or in granules. The composition of the different types of this "lecithin powder" or granules varies in relative quantities of products, especially phospholipids.

In this specification, the expression "use in agriculture" means that the product to which it refers is neither intended nor suitable for human consumption.

The term "arthropods" refers to invertebrate animals that form the most diverse phylum of the animal kingdom. These animals have their bodies covered by an exoskeleton known as cuticle, forming a linear series of ostensible segments with appendages of articulated parts. Arachnids, insects and crustaceans are arthropods.

The term "insects" refers to a class of invertebrate animals in the arthropods phylum, characterized by a pair of antennas, three pairs of legs and two pairs of wings.

The term "mites" refers to a subclass of arachnids included in the phylum of arthropods.

The term "formula" refers to a solid product comprising deoiled lecithin - as a powder or granules - and which may optionally include one or more inert and/or other active substances.

The present invention refers in the first place to the use of lecithin, preferably deoiled lecithin, as a biocide against arthropod species, and in particular as an acaricide or insecticide, wherein

the lecithin is applied as a liquid composition as a spray.

The liquid composition, or in liquid form, is also called application broth. The liquid composition at least comprises:

- a solid formulate of lecithin and
- water

and the composition is now ready for field application.

This liquid composition can be prepared from a solid formula comprising deoiled lecithin.

This liquid composition may comprise deoiled lecithin - in powder or granules - pure or mixed with at least one additional substance, which may be inert or active.

According to the invention, deoiled lecithin (lecithin powder or granules) can be present in the solid formula, in an amount between 10% and 100% by weight with respect to the total weight of the formulate, preferably between 70% and 100%, and more preferably between 80% and 100%, and even more preferably between 90% and 100% by weight with respect to the total weight of the formulate.

The inert substances that can be used can be among the following: monopotassium phosphate, monoammonium phosphate, clay, talc, potassium nitrate, ammonium sulphate, amino acids, peptides, proteins, carboxylic acids such as dicarboxylic acids, citric acid, ascorbic acid, glutamates, acetates, humates, potassium carbonate, potassium sorbate, potassium malate, citrulline malate, urea, potassium chloride, oxalate, zeolite, alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate, or combinations thereof.

In a preferred mode these substances are selected from mica, kaolin, fructose, sucrose, chitosan, calcium hydroxide, quartz sand, sodium bicarbonate, whey and mixtures thereof.

The inert substance or substances fulfil an essential function, such as improving the formulation in aspects such as solubility, stability, exerting an anticaking, anti-moisturising and/or colouring effect. Some of these properties are also essential in order to be able to market the product under good storage conditions and in good condition for use.

The liquid composition for the field application comprises at least the solid lecithin formula and water.

According to particular embodiments this composition comprises only solid lecithin formula and water, and lecithin is present in a concentration equal to or greater than 0.5 grams of lecithin per litre of water up to 30 grams per litre of water.

According to further particular embodiments this composition comprises lecithin in a concentration equal or greater than 0.5 grams of lecithin per litre of water, preferably greater than 1.1 grams of lecithin per litre of water up to 30 grams per litre.

For example, the liquid composition may comprise lecithin in a concentration between 0.5 grams of lecithin per litre of water and 30 grams of lecithin per litre of water. Preferred compositions comprise lecithin in a concentration between 1.1 grams of lecithin per litre of water and 10 grams of lecithin per litre of water, and even more preferably they comprise lecithin in a concentration between 2 grams of lecithin per litre of water and 5 grams of lecithin per litre of water.

Lecithin for use as a biocide against arthropods can have any origin, and depending on particular embodiments is selected among soy lecithin, sunflower lecithin, rapeseed lecithin, cotton lecithin, egg lecithin and mixtures thereof.

According to particular embodiments of the present invention the arthropods are selected from insects and arachnids.

In particular, arthropods are arachnids, preferably mites.

In particular, arthropods are insects. The arthropods are selected in particular among red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca spp*), aphid (*Macrosyphum euphorbiae*), aphid (*Myzus persicae*), aphid (*Aphis gossypii*), aphid (*Aphis fabae*), *Aulacartun solani* and *Creontiades pallidus,* glasshouse whitefly (*Trialeurodes vaporariorum*), medfly (*Ceratitis capitata*), tomato leafminer( *Tuta absoluta*), cottony cushion scale (*Icerya purchasi*), solanum mealybug (*Phenacoccus solani*), southern green shield bug (*Nezara viridula*), pea leaf miner (*Liriomyza huidobrensis*).

The present invention also refers to a solid formula of lecithin for agricultural use comprising deoiled lecithin, as:

- powder or granules in an amount between 80% and 90% by weight with respect to the total weight of the formulate,
- accompanied by:

  - one or more inert substances selected among the ones previously mentioned
    and/or

- one or more active substance selected from abamectin and oxalic acid.

These inert substances can be selected among: monopotassium phosphate, monoammonium phosphate, clay, talc, potassium nitrate, ammonium sulphate, amino acids, peptides, proteins, carboxylic acids such as dicarboxylic acids, citric acid, ascorbic acid, glutamates, acetates, humates, potassium carbonate, potassium sorbate, potassium malate, citrulline malate, urea, potassium chloride, oxalate, zeolite, alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate or mixtures thereof.

According to preferred embodiments, inert substances are selected among mica, kaolin, fructose, sucrose, chitosan, calcium hydroxide, quartz sand, sodium bicarbonate and mixtures thereof.

According to the invention, inert substances may be present in the solid formula in a proportion, for example, between 10 and 90 % by weight with respect to the total weight of the formula.

According to the invention, additional active substances may be present in the solid formulation in a proportion between 10 and 90 % by weight of the total weight of the formula.

Among the active substances, for example, abamectin and oxalic acid can be used.

According to the invention, in the solid formula lecithin can be any lecithin or mixture of lecithins. For example, it may be a vegetable lecithin or egg lecithin. Preferably selected lecithins are soy lecithin, sunflower lecithin, rapeseed lecithin, cotton lecithin, egg lecithin and mixtures thereof.

In particular, the solid formula is used to prepare a liquid composition comprising deoiled lecithin in a concentration between 0.05% and 3% by total weight of the liquid composition.

In addition, the present invention refers to a liquid composition comprising at least:

- a solid formula of deoiled lecithin as defined above, mixed with one or more inert substances selected from monopotassium phosphate, monoammonium phosphate, clay, talc, potassium nitrate, ammonium sulphate, amino acids, peptides, proteins, carboxylic acids, glutamates, acetates, humates, potassium carbonate, potassium sorbate, potassium malate, citrulline malate, urea, potassium chloride, oxalate, zeolite, , alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate
- water,
- and one or more active substances selected from abamectin and oxalic acid,
  ready to be used as a spray

wherein the lecithin is present in a concentration between 0.5 grams of lecithin per litre of water and 30 grams of lecithin per litre of water, preferably between 1.1 grams of lecithin per litre of water and 30 grams of lecithin per litre of water,

Particular embodiments of the composition include lecithin in a concentration between 1.1 grams of lecithin per litre of water and 10 grams of lecithin per litre of water, and even more preferably include lecithin in a concentration between 2 grams of lecithin per litre of water and 5 grams of lecithin per litre of water.

In the liquid composition defined above, such formula may be a solid formula comprising pure deoiled lecithin (in powder or granules) or lecithin powder mixed with one or more inert and/or active substances. These inert substances can be any substance that does not affect the environment negatively, preferably those approved for organic farming.

According to particular embodiments the inert substances are selected among monopotassium phosphate, monoammonium phosphate, clay, talc, potassium nitrate, ammonium sulphate, amino acids, peptides, proteins, carboxylic acids, glutamate, acetates, humates, potassium carbonate, potassium sorbate, potassium malate, citrulline malate, urea, potassium chloride, oxalate, zeolite, alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate and mixtures thereof.

In the liquid composition defined above, such formula may also be a solid formula comprising pure lecithin powder or lecithin powder mixed with one or more inert and/or active substances.

In the liquid composition of the invention the inert substances can be present in a concentration of between 0 and 13.5% in weight with respect to the total weight of the composition.

In the liquid composition of the invention the additional active substances may be present in a concentration of between 0 and 13.5% by weight with respect to the total weight of the composition.

According to particular embodiments the liquid composition comprises, in addition to deoiled lecithin, as an additional active substance, oxalic acid or abamectin. Oxalic acid may be present in the solid formula - the starting product for obtaining the liquid composition - in a ratio of approximately 2:1 w/w, i.e. 2 parts lecithin and 1 part oxalic. Abamectin may be present in the liquid composition at a concentration between 0.0003 % and 0.08 % (w/v total volume of the composition), preferably 0.0009 % and 0.00144 % w/volume.

According to the invention, in the liquid composition the lecithin can be any or mixtures of lecithins, and preferably selected from soy lecithin, sunflower lecithin, rapeseed lecithin, cotton lecithin and egg lecithin, or mixtures thereof.

The present invention also refers to the use of the solid formula to prepare a liquid composition as defined above.

The present invention also refers to the use of the composition defined above, or of the formula defined above, in agriculture.

In particular, the solid formula of the invention or of the composition of the invention is aimed at using them as a biocides, and preferably against arthropods species, and preferably against insects and arachnids. Preferably, arthropods are arachnids, and more preferably, mites.

According to preferred embodiments, the use of the solid formula, or of the liquid composition of the invention refers to the use wherein the arthropods are selected from Red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca spp*), aphid (*Macrosyphum euphorbiae*), aphid (*Myzus persicae*), aphid *(Aphis gossypii)*, aphid (*Aphis fabae*), *Aulacartun solani* and *Creontiades pallidus.*

Other arthropod species against which the solid formula or the liquid composition of lecithins can be used are, for example: glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*), and pea leaf miner (*Liriomyza huidobrensis*).

The use of a solid formula of lecithin is essential in the invention, and one of the main advantages, because otherwise lecithin would not be effective as an acaricide/insecticide, since the concentrations of maximum biocidal efficacy that are necessary compared to all the uses and studies that have been made with it so far in the agricultural sector could not be reached.

**Examples:**

**Example 1**

Tests with soy lecithin and sunflower lecithin have been conducted. For this purpose, deoiled lecithin of a 100% purity, i.e. pure deoiled lecithin powder, was used as the starting product.

Each solid formula of lecithin was tested at different concentrations, expressed in grams of deoiled lecithin per litre of water: 0.5 g/l, 1 g/l, 2 g/l, 4 g/l, 8 g/l and 16 g/l. For each working solution, the corresponding amounts of lecithin were weighed and dissolved in water by stirring at room temperature.

The acaricidal or insecticidal activity of the lecithins in their different concentrations was evaluated against one mite and two insects, considered a global pest in horticultural crops:

- *Tetranychus urticae,* a mite pest commonly called "red spider mite".
- *Frankliniella occidentalis,* phytophagous insect commonly called "thrips".
- *Aphis fabae,* aphid.

The acaricidal and/or insecticidal activity of the different lecithin solutions was evaluated at the different concentrations of the example, both in adult and immature phases of the three pests used. Manual sprayings were carried out on larvae and adults to carry out the tests.

The acaricidal or insecticidal activity was determined in terms of mortality percentage or mortality efficacy of red spider mite, thrips and aphid. Negative controls were included in the tests, i.e. healthy spider, thrips or aphid populations that were only treated with distilled water.

Mortality efficiencies obtained from each treatment, each composition and each concentration in each pest tested were subjected to Henderson-Tilton correction. (Henderson, C.F. and E. W. Tilton, 1955. Tests with acaricides against the brow wheat mite, J. Econ. Entomol. 48:157-161), using the following formula:

$$\text{Henderson-Tilton efficacy \%} = [1-(Td/Cd) \times (Ca/Ta)] \times 100$$

Wherein:

Ta = n° of individuals alive in the treatment before application.
Td = n° of individuals alive in the treatment after application.
Ca = n° of control individuals alive before application.
Cd = n° of control individuals alive after application.

The corrected mortality efficacy results obtained were subjected to statistical tests in order to verify the statistical significance of the results.

Table 2 shows the summary of Henderson-Tilton corrected efficacy results obtained in the different assays by different lecithins, in their different formulations and at different concentrations on the three pests used in the assay:

Table 2. Results of Henderson-Tilton corrected mortality efficacy in % obtained from the different tests.

| | Soy Lecithin | | | | | | | Sunflower Lecithin | | | | | | |
| | Solid Powder Format | | | | | | | Solid Powder Format | | | | | | |
| Final application concentrations in g/l | 0.5 | 1 | 2 | 4 | 6 | 8 | 16 | 0.5 | 1 | 2 | 4 | 6 | 8 | 16 |
|---|---|---|---|---|---|---|---|---|---|---|---|---|---|---|
| immature *T. urticae* | 15 | 51 | 98 | 100 | 100 | 100 | 100 | 11 | 42 | 94 | 100 | 100 | 100 | 100 |
| adults *T.urticae* | 10 | 46 | 90 | 100 | 100 | 100 | 100 | 8 | 40 | 86 | 100 | 100 | 100 | 100 |
| immature *F. occidentalis* | 8 | 45 | 70 | 96 | 100 | 100 | 100 | 8 | 41 | 70 | 99 | 100 | 100 | 100 |
| adults *F. occidentalis* | 5 | 20 | 43 | 70 | 87 | 100 | 100 | 7 | 19 | 40 | 68 | 91 | 100 | 100 |
| immature *A. fabae* | 12 | 51 | 84 | 100 | 100 | 100 | 100 | 10 | 53 | 80 | 100 | 100 | 100 | 100 |
| adults *A. fabae* | 6 | 18 | 42 | 67 | 81 | 95 | 100 | 8 | 15 | 39 | 62 | 77 | 95 | 100 |

All the corrected mortality efficacies obtained were statistically significant with a significance level of 95%, so all the compositions tested showed insecticidal and/or acaricidal activity at the doses examined.

Both soy and sunflower lecithin compositions have shown insecticidal and/or acaricidal activity on the pests used in the assay, in their different formulations and at different concentrations. This activity takes place in the different life cycle phases of the insects and mites tested and would allow to control, to a certain degree, the pests tested in field conditions.

**Example 2.**

Tests have been carried out with deoiled soy lecithin mixed with chitosan as an inert substance as a method to improve the product water solubility. For this purpose, solid deoiled powdered lecithin was used as a starting product and mixed with chitosan powder in a ratio of 3:1 w/w, that is, 3 parts lecithin and 1 part chitosan, thus, the lecithin powder tested against various insects and mites had a final richness of 75% by weight of lecithin with respect to the total and 25% by weight of chitosan with respect to the total.

This mixture of 75% lecithin and 25% chitosan was tested at concentrations, expressed in grams of the mixture of lecithin and chitosan per litre of water, of 0.5 g/l, 1 g/l, 2 g/l, 4 g/l, 8 g/l and 16 g/l. For each of the working solutions, the corresponding quantities of mixture were weighed and dissolved in water by stirring at room temperature for a few seconds.

The acaricidal or insecticidal activity of the lecithin 75% and chitosan 25% mixture at their different concentrations was evaluated against one mite and two species of insects, considered a global pest in horticultural crops:

- *Tetranychus urticae,* a mite pest commonly called "red spider mite".
- *Frankliniella occidentalis,* phytophagous insect commonly called "thrips".
- *Aphis fabae,* aphid.

The acaricidal and/or insecticidal activity of the lecithin formulas of this example was evaluated in both the adult and immature phases of the three pests used.

The acaricidal or insecticidal activity was determined in terms of mortality percentage or mortality efficacy of red spider mite, thrips and aphid. Negative controls were included in the tests, i.e. healthy spider, thrips or aphid populations that were only treated with distilled water. Mortality efficiencies obtained at each concentration in each pest tested were subjected to Henderson-Tilton correction with the following formula:

$$\text{Henderson-Tilton efficacy \%} = [1-(Td/Cd) \times (Ca/Ta)] \times 100$$

Wherein:

Ta = n° of individuals alive in treatment before application.
Td = n° of individuals alive in treatment after application.
Ca = n° of control individuals alive before application.
Cd = n° of control individuals alive after application.

The corrected mortality efficacy results obtained were subjected to statistical tests in order to verify the statistical significance of the results.

Table 3 shows the summary of Henderson-Tilton corrected efficacy results obtained in the different assays for lecithin of 75% richness at different concentrations on the three pests used in the trial:

Table 3

| | Soy Lecithin + Chitosan | | | | | | |
|---|---|---|---|---|---|---|---|
| | Solid Powder Format | | | | | | |
| Final mixture application concentrations g/l[a)] | 0.5 | 1 | 2 | 4 | 6 | 8 | 16 |
| immature *T.urticae* | 14 | 45 | 93 | 100 | 100 | 100 | 100 |
| adults *T.urticae* | 9 | 39 | 80 | 99 | 100 | 100 | 100 |
| immature *F. occidentalis* | 5 | 45 | 66 | 99 | 100 | 100 | 100 |
| adults *F. occidentalis* | 8 | 23 | 32 | 72 | 92 | 100 | 100 |
| immature *A. fabae* | 12 | 50 | 78 | 100 | 100 | 100 | 100 |
| adults *A. fabae* | 10 | 19 | 41 | 65 | 70 | 100 | 100 |
| a) final concentrations of lecithin and chitosan (grams of lecithin and chitosan per litre of water) | | | | | | | |

All the corrected mortality efficacies obtained were statistically significant with a significance level of 95%, so all concentrations showed insecticidal and/or acaricidal activity at the doses tested.

The compositions of soy lecithin and chitosan as inert substance in the ratio 3:1 have shown to have insecticidal and/or acaricidal activity on the pests used in the assay at the different concentrations. This activity takes place at the different life cycle phases of the tested insects and mites and would allow to control, to a certain degree, the pests tested in field conditions. On the other hand, these efficiencies have resulted being equivalent to those obtained with the use of soy lecithin pure powder and dissolved in water at the same final concentrations.

**Example 3**

A test with soy lecithin has been carried out. For this purpose, deoiled lecithin with a 100% richness, i.e. pure powdered lecithin, was used as a starting product.

Each solid formula of lecithin was tested at different concentrations, expressed in grams of deoiled lecithin per litre of water: 0.5 g/l, 1 g/l, 2.5 g/l, 5 g/l, 10 g/l, 15 g/l and 30 g/l. For each of the working solutions, the corresponding amounts of lecithin were weighed and dissolved in water by stirring at room temperature for a few seconds.

The acaricidal or insecticidal activity of lecithin at its different concentrations was evaluated against two mites and one insect, considered a global pest in horticultural crops:

- *Tetranychus evansi,* a mite pest commonly called "red spider mite".
- *Aculops lycopersici,* a mite pest
- *Myzus persicae,* an aphid.

The acaricidal and/or insecticidal activity of the different lecithin solutions was evaluated at the different concentrations of the example, both in adult and immature phases of the three pests used. Manual sprayings were carried out on larvae and adults to carry out the tests.

The acaricidal or insecticidal activity was determined in terms of mortality percentage or mortality efficacy of the three pests used for the evaluation. Negative controls were included in the tests, i.e. populations of mites or insects that were only treated with distilled water under the same conditions as the sprays of the tested preparations.

The mortality efficacies obtained from each treatment, each composition and each concentration in each tested pest were subjected to the Henderson-Tilton correction, with the following formula:

$$\text{Henderson-Tilton efficacy \%} = [1-(Td/Cd) \times (Ca/Ta)] \times 100$$

Wherein:

Ta = n° of individuals alive in treatment before application.
Td = n° of individuals alive in treatment after application.
Ca = n° of control individuals alive before application.
Cd = n° of control individuals alive after application.

The corrected mortality efficacy results obtained were subjected to statistical tests in order to verify the statistical significance of the results.

Table 4 shows the summary of the corrected Henderson-Tilton efficacy results obtained in the different assays for deoiled lecithin, in its different formulations and at different concentrations on the three pests used in the assay:

Table 4. Henderson-Tilton corrected mortality efficacy results in % obtained in the different tests.

|  | Soy Lecithin | | | | | | |
|---|---|---|---|---|---|---|---|
|  | Solid Powder Format | | | | | | |
| Final application concentrations in g/l | 0.5 | 1 | 2.5 | 5 | 10 | 15 | 30 |
| immature *T.urticae* | 13 | 48 | 93 | 98 | 100 | 100 | 100 |
| adults *T.urticae* | 10 | 46 | 96 | 100 | 100 | 100 | 100 |
| immature *A. lycopersici* | 8 | 10 | 21 | 67 | 80 | 92 | 100 |
| adults *A. lycopersici* | 9 | 16 | 25 | 60 | 87 | 94 | 100 |
| immature *M. persicae* | 12 | 24 | 46 | 70 | 89 | 99 | 100 |
| adults *M. persicae* | 10 | 18 | 39 | 68 | 87 | 92 | 100 |

All the corrected mortality efficacies obtained were statistically significant with a significance level of 95%, so all the compositions tested showed insecticidal and/or acaricidal activity at the doses examined.

Deoiled soybean lecithin compositions have shown insecticidal and/or acaricidal activity on the pests used in the assay, in their different formulase and different concentrations. This activity takes place in the life cycle different phases of the tested insects and mites and would allow to control, to a certain degree, the pests tested in field conditions.

**Example 4**

A test with deoiled egg lecithin has been carried out. For this purpose, deoiled lecithin with a 100% richness was used as a starting product, i.e. pure powdered lecithin.

Each solid formula of deoiled lecithin was tested at different concentrations, expressed in grams of deoiled lecithin per litre of water: 0.5 g/l, 1 g/l, 2.5 g/l, 5 g/l, 10 g/l and 15 g/l and 30 g/l. For each working solution, the corresponding amounts of lecithin were weighed and dissolved in water by stirring for a few seconds.

The acaricidal or insecticidal activity of lecithin at its different concentrations was evaluated against one mite and two insects, considered as a global pest in horticultural crops:

- *Polyphagotarsonemus latus,* mite pest commonly called "broad mite".
- *Aphis gossypii,* aphid, commonly called cotton aphid.
- *Bemisia tabaci,* insect pest commonly called silverleaf whitefly.

The acaricidal and/or insecticidal activity of the different lecithin solutions was evaluated at the different concentrations of the example, both in adult and immature phases of the three pests used. Manual sprayings were carried out on larvae and adults to carry out the tests.

The acaricidal or insecticidal activity was determined in terms of mortality percentage or mortality efficacy of the three pests used for the evaluation. Negative controls were included in the tests, i.e. populations of mites or insects that were only treated with distilled water under the same conditions as the sprays of the tested preparations.

The mortality efficacies obtained from each treatment, each composition and each concentration in each tested pest were subjected to the Henderson-Tilton correction, with the following formula:

$$\text{Henderson-Tilton efficacy \%} = [1-(Td/Cd) \times (Ca/Ta)] \times 100$$

Wherein:

Ta = n° of individuals alive in treatment before application.
Td = n° of individuals alive in treatment after application.
Ca = n° of control individuals alive before application.
Cd = n° of control individuals alive after application.

The corrected mortality efficacy results obtained were subjected to statistical tests in order to verify the statistical significance of the results.

Table 5 shows the summary of Henderson-Tilton corrected efficacy results obtained in the different lecithin assays, in their different formulations and at different concentrations on the three pests used in the assay.

Table 5. Henderson-Tilton corrected mortality efficacy results in % obtained in the different tests.

| | Egg Lecithin | | | | | | |
|---|---|---|---|---|---|---|---|
| | Solid Powder Format | | | | | | |
| Final application concentrations in g/l | 0.5 | 1 | 2.5 | 5 | 10 | 15 | 30 |
| immature *P.latus* | 24 | 48 | 95 | 100 | 100 | 100 | 100 |
| adults *P.latus* | 20 | 41 | 90 | 99 | 100 | 100 | 100 |
| immature *A.gossypii* | 8 | 12 | 23 | 65 | 81 | 90 | 100 |
| adults *A. gossypii* | 9 | 16 | 25 | 67 | 87 | 94 | 100 |
| immature *B. tabaci* | 11 | 25 | 53 | 79 | 92 | 99 | 100 |
| adults *B. tabaci* | 10 | 20 | 42 | 63 | 87 | 92 | 100 |

All the corrected mortality efficacies obtained were statistically significant with a significance level of 95%, so all the compositions tested showed insecticidal and/or acaricidal activity at the doses examined.

Egg lecithin compositions have shown insecticidal and/or acaricidal activity on the pests used in the assay, in their different formulations and different concentrations. This activity takes place in the life cycle different phases of the tested insects and mites and would allow to control, to a certain degree, the pests tested in field conditions.

**Example 5**

Test have been conducted with deoiled soy lecithin mixed with abamectin as an additional active ingredient to evaluate a possible improvement in the biocidal efficacy of the liquid composition. Liquid compositions formed by a fixed amount of abamectin and a variable amount of soy lecithin in each of them, dissolved in water, were evaluated.. The biocidal activity of each of the formulated liquid compositions was evaluated.

Commercially, abamectin is sold as liquid compositions carrying 1.8% weight/volume of active substance.

Each of the compositions tested contained abamectin at a final concentration of 0.005% (v/v total volume of the composition) and a variable amount of soy lecithin.

The amount of soy lecithin expressed in grams of lecithin and litre of water was 0.5 g/l, 1 g/l, 2 g/l, 4 g/l, 8 g/l and 16 g/l. To prepare each of the liquid working compositions, the corresponding amounts of lecithin were weighed and dissolved in the mixture of water and abamectin at 0.005% by stirring for a few seconds at room temperature.

The acaricidal or insecticidal activity of the mixture of abamectin and lecithin, in its different concentrations, was evaluated against one mite species and two species of insects, considered a global pest in horticultural crops:

- *Tetranychus urticae,* a pest commonly called "red spider mite".
- *Bemisia tabaci,* a phytophagous insect commonly called silverleaf whitefly.
- *Aphis gossypii,* an aphid

The acaricidal and/or insecticidal activity of the lecithin and abamectin liquid compositions was evaluated in both the adult and immature phases of the three pests used.

The acaricidal or insecticidal activity was determined in terms of mortality percentage or mortality efficacy of the red spider mite, silverleaf whitefly and the aphid. Negative controls, i.e. healthy spider, silverleaf whitefly, or aphid populations were included in the assays and were only treated with distilled water.

Mortality efficiencies obtained at each concentration in each pest assayed were subjected to Henderson-Tilton correction using the following formula:

$$\text{Henderson-Tilton efficacy \%} = [1-(Td/Cd) \times (Ca/Ta)] \times 100$$

Wherein:

Ta = n° of individuals alive in treatment before application.
Td = n° of individuals alive in treatment after application.
Ca = n° of control individuals alive before application.
Cd = n° of control individuals alive after application.

The corrected mortality efficacy results obtained were subjected to statistical tests in order to verify the statistical significance of the results.

Table 6 shows the summary of Henderson-Tilton corrected efficacy results obtained in the various tests for the mixture of 0.005% abamectin and amounts of lecithin at different concentrations on the three pests used in the assays:

Table 6.

| Final mixture application concentrations g/l[a)] | Soy Lecithin + **0.005%** abamectin final | | | | | | |
|---|---|---|---|---|---|---|---|
| | Deoiled Lecithin Format | | | | | | |
| | **0.5** | **1** | **2** | **4** | **6** | **8** | **16** |
| immature *T.urticae* | 19 | 50 | 95 | 100 | 100 | 100 | 100 |
| adults *T.urticae* | 12 | 40 | 81 | 100 | 100 | 100 | 100 |
| immature *B. tabaci* | 10 | 47 | 65 | 100 | 100 | 100 | 100 |
| adults *B.tabaci* | 10 | 30 | 33 | 80 | 100 | 100 | 100 |
| immature *A. gossypii* | 15 | 55 | 80 | 100 | 100 | 100 | 100 |
| adults *A. gossypii* | 16 | 22 | 43 | 78 | 100 | 100 | 100 |
| a) final concentrations of lecithin (grams of lecithin per litre of water) in a final 0.005% abamectin solution. | | | | | | | |

All the corrected mortality efficacies obtained were statistically significant with a significance level of 95%, so all concentrations showed insecticidal and/or acaricidal activity at the doses tested.

The compositions of soy lecithin and abamectin as active substance have shown insecticidal and/or acaricidal activity on the pests used in the assay at different concentrations. This activity takes place in the life cycle different phases of the insects and mites tested and allows to exercise, to some extent, a control of the pests tested under field conditions. Additionally, these efficiencies have turned out to be equivalent to those obtained with the use of soy lecithin in pure powder and dissolved in water at the same final concentrations.

**Example 6**

Tests with soy lecithin mixed with oxalic acid as active substance have been conducted to evaluate the biocidal efficacy of the mixture. For this purpose, solid powder of deoiled lecithin was used as a starting product and mixed with powder oxalic acid in a ratio of approximately 2:1 w/w, i.e. 2 parts lecithin and 1 part oxalic acid, so that the powder lecithin tested against various insects and mites had a final richness of 75% by weight of lecithin with respect to the total and 25% by weight of oxalic acid with respect to the total.

This mixture of 67% lecithin and 33% oxalic acid was tested at the concentrations, expressed in grams, of 0.5 g/l, 1 g/l, 2 g/l, 4 g/l, 8 g/l and 16 g/l of the mixture of lecithin and oxalic acid per litre of water. To prepare each of the working solutions, the corresponding quantities of the mixture were weighed and dissolved in water by stirring for a few seconds.

The acaricidal or insecticidal activity of the lecithin 67% and oxalic 33% mixture in its different concentrations was evaluated against one mite species and two species of insects, considered a global pest in horticultural crops:

- *Polyphagotarsonemus latus,* mite pest commonly called "broad mite".
- *Tuta absoluta,* an insect pest commonly called "tomato leafminer".
- *Macrosiphum euphorbiae,* an aphid

The acaricidal and/or insecticidal activity of this example lecithin formulas was evaluated in both the adult and immature phases of the three pests used.

The acaricidal or insecticidal activity was determined in terms of mortality percentage or mortality efficacy of the broad mite, moth and aphid. Negative controls were included in the assays, i.e. populations of healthy broad mites, moths or aphids that were only treated with distilled water.

Mortality efficiencies obtained at each concentration in each pest tested were subjected to Henderson-Tilton correction with the following formula:

$$\text{Henderson-Tilton efficacy \% = [1-(Td/Cd) x (Ca/Ta)] x 100}$$

Wherein:

Ta = n° of individuals alive in treatment before application.
Td = n° of individuals alive in treatment after application.
Ca = n° of control individuals alive before application.
Cd = n° of control individuals alive after application.

The corrected mortality efficacy results obtained were subjected to statistical tests in order to verify the statistical significance of the results.

Table 7 shows the summary of Henderson-Tilton corrected efficacy results obtained in the different assays for lecithin of 67% richness at different concentrations on the three pests used in the assay:

Table 7

| | Soy Lecithin + Oxalic acid | | | | | | |
| | Solid Powder Format | | | | | | |
| Final mixture application concentrations g/l[a)] | 0.5 | 1 | 2 | 4 | 6 | 8 | 16 |
|---|---|---|---|---|---|---|---|
| immatures *P. latus* | 12 | 40 | 95 | 100 | 100 | 100 | 100 |
| adults *P. latus* | 10 | 35 | 74 | 85 | 99 | 100 | 100 |
| immatures *T. absoluta* | 6 | 38 | 48 | 70 | 100 | 100 | 100 |
| adults *T. absoluta* | 14 | 34 | 53 | 80 | 100 | 100 | 100 |
| immatures *M. euphorbiae* | 11 | 49 | 79 | 100 | 100 | 100 | 100 |
| adults *M. euphorbiae* | 10 | 35 | 67 | 84 | 90 | 100 | 100 |
| a) final lecithin and oxalic concentrations (lecithin and oxalic grams per litre of water) | | | | | | | |

All the corrected mortality efficacies obtained were statistically significant with a significance level of 95%, so all concentrations showed insecticidal and/or acaricidal activity at the doses tested.

The compositions of soy lecithin and oxalic acid as additional active substance in the ratio of approximately 2:1 have demonstrated insecticidal and/or acaricidal activity on the pests used in the assay at the different concentrations. This activity takes place in the different life cycle phases of the assayed insects and mites and allows to exert, to a certain degree, a control of the assayed pests in field conditions. Additionally, these efficiencies have turned out to be equivalent to those obtained with the use of soy lecithin as pure powder and dissolved in water at the same final concentrations.

References

1. Food Chemicals Codex, 4th ed., National Academy Press, Washington, D. C., 1996, pp. 220- 221.

2. Schneider, M. in Lecithins: Sources, Manufacture, & Uses, American Oil Chemists' Society, Champaign, Illinois, 1989, pp. 109- 130.

3. Schmidt, J. C. and Orthoefer, F. T., in Lecithins, American Oil Chemists' Society, Champaign, Illinois, 1985, pp. 183-202.

4. EUROPEAN COMMISSION, DIRECTORATE-GENERAL FOR HEALTH AND FOOD SAFETY, Safety of the Food Chain, Pesticides and Biocides, SANCO/12798/2014- rev. 2; 30 March 2015.

**Claims**

1. Non-therapeutic use of a lecithin as a biocide against arthropod species wherein the lecithin is applied as a liquid composition as a spray.

2. Use according to the preceding claim wherein the lecithin is deoiled lecithin as powder or granular form.

3. Use of a lecithin according to claim 1 or 2, wherein the liquid composition comprises a solid formula of deoiled lecithin and wherein the deoiled lecithin is lecithin as powder or granular form.

4. Use of a lecithin according to claim 3, wherein said formula includes deoiled lecithin - pure or

   - mixed with:

      - at least one inert substance, said inert substances. is selected from monopotassium phosphate, monoammonium phosphate, clay, talc, potassium nitrate, ammonium sulphate, amino acids, peptides, proteins, carboxylic acids, glutamate, acetates, humates, potassium carbonate, potassium sorbate, potassium malate, citrulline malate, urea, potassium chloride, oxalate, zeolite, alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate, and mixtures thereof, - an active substance selected from abamectin and oxalic acid
      - or combinations thereof.

5. Use of a lecithin according to claim 3 or 4, wherein said formula includes deoiled lecithin

   - as powder or granules - in an amount of at least 50% by weight of the total formula weight.

6. Use of a lecithin according to claim 1 or 2, wherein the liquid composition includes at least lecithin and water.

7. Use of a lecithin according to the previous claim, wherein that composition comprises only lecithin and water, and the lecithin is present in a concentration equal to or greater than 0.5 grams of lecithin per litre of water, preferably in a concentration greater than 1.1 grams of lecithin per litre of water.

8. Use of a lecithin according to claim 5, wherein the composition includes lecithin at a concentration equal to or greater than 0.5 grams of lecithin per litre of water, preferably at a concentration greater than 1.1 grams of lecithin per litre of water.

9. Use according to claim 1, wherein the lecithin is selected from soy lecithin, sunflower lecithin, rapeseed lecithin, cotton lecithin, egg lecithin and mixtures thereof.

10. Use according to claim 1, wherein arthropods are selected from insects and arachnids.

11. Use according to claim 10, wherein arachnids are mites.

12. Use according to claim 1, wherein arthropods are selected from red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca spp*), aphid (*Macrosyphum euphorbiae*), aphid (*Myzus persicae*), aphid (*Aphis gossypii*), aphid (*Aphis fabae*), *Aulacartun solani* and *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*), and pea leaf miner (*Liriomyza huidobrensis*).

**13.** A solid formula of deoiled lecithin for agricultural use, comprising lecithin as:

- powder or granules in an amount between 80% and 90% by weight with respect to the total weight of the formulate,
- accompanied by:

- one or more inert substances said inert substances selected from monopotassium phosphate, monoammonium phosphate, clay, talc, potassium nitrate, ammonium sulphate, amino acids, peptides, proteins, carboxylic acids, glutamate, acetates, humates, potassium carbonate, potassium sorbate, potassium malate, citrulline malate, urea, potassium chloride, oxalate, zeolite, alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate, and
- one or more active substances selected from abamectin and oxalic acid.

**14.** A liquid composition comprising at least:

- pure powder lecithin or powder lecithin mixed with one or more inert substances selected from monopotassium phosphate, monoammonium phosphate, clay, talc, potassium nitrate, ammonium sulphate, amino acids, peptides, proteins, carboxylic acids, glutamates, acetates, humates, potassium carbonate, potassium sorbate, potassium malate, citrulline malate, urea, potassium chloride, oxalate, zeolite, , alginates, diatomaceous earth, xanthan gum, gum arabic, methylcellulose, agarose, acrylamide, lignin, pectin, lignosulfonates, molybdates, biammonium phosphate, mica, kaolin, fructose, sucrose, chitosan, calcium hydroxide, quartz sand, sodium bicarbonate,

and comprises one or more active substances selected from abamectin and oxalic acid.

- and water,

ready to be used as a spray
wherein the lecithin is present in a concentration between 0.5 grams of lecithin and 30 g/l of water, preferably between 1.1 grams of lecithin per litre of water and 10 grams of lecithin per litre of water.

**15.** A liquid composition according to claim 14, wherein lecithin is selected from soy lecithin, sunflower lecithin, rapeseed lecithin, cotton lecithin, egg lecithin and mixtures thereof.

**16.** Non-therapeutic use of the liquid composition defined in claim 14 or 15 as biocides against arthropod species, preferably insects and arachnids.

**17.** Use according to the previous claim, wherein arachnids are mites.

**18.** Use according to claim 17, wherein arthropods are selected from red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca spp*), aphid (*Macrosyphum euphorbiae*), aphid (*Myzus persicae*), aphid (*Aphis gossypii*), aphid (*Aphis fabae*), *Aulacartun solani* and *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*), and pea leaf miner (*Liriomyza huidobrensis*).

**Patentansprüche**

**1.** Nichttherapeutische Verwendung eines Lecithins als Biozid gegen Arthropodenarten, wobei das Lecithin in Form einer flüssigen Zusammensetzung als Spray aufgebracht wird.

**2.** Verwendung nach Anspruch 1, wobei das Lecithin entfettetes Lecithin in Pulver- oder Granulatform ist.

**3.** Verwendung eines Lecithins nach Anspruch 1 oder 2, wobei die flüssige Zusammensetzung eine feste Formulierung aus entfettetem Lecithin umfasst und wobei das entfettete Lecithin Lecithin in Pulver- oder Granulatform ist.

**4.** Verwendung eines Lecithins nach Anspruch 3, wobei die genannte Formulierung entfettetes Lecithin umfasst - rein oder - gemischt mit: - mindestens einer inerten Substanz, wobei die inerten Substanzen ausgewählt sind aus Monokaliumphosphat, Monoammoniumphosphat, Ton, Talkum, Kaliumnitrat, Ammoniumsulfat, Aminosäuren, Peptiden, Proteinen, Carbonsäuren, Glutamat, Acetaten, Humaten, Kaliumcarbonat, Kaliumsorbat, Kaliummalat, Citrullinmalat, Harnstoff, Kaliumchlorid, Oxalat, Zeolith, Alginaten, Kieselgur, Xanthan, Gummi arabicum, Methylcellulose, Agarose, Acrylamid, Lignin, Pektin, Lignosulfonaten, Molybdaten, Biammoniumphosphat, Glimmer, Kaolin, Fructose, Saccharose, Chitosan, Calciumhydroxid, Quarzsand, Natriumhydrogencarbonat, sowie Mischungen davon, - einer aktiven Substanz ausgewählt aus Abamectin und Oxalsäure - oder Kombinationen davon.

**5.** Verwendung eines Lecithins nach Anspruch 3 oder 4, wobei die genannte Formulierung entfettetes Lecithin - als Pulver oder Granulat - in einer Menge von mindestens 50 Gew.-% des Gesamtgewichts der Formulierung umfasst.

**6.** Verwendung eines Lecithins nach Anspruch 1 oder 2, wobei die flüssige Zusammensetzung mindestens Lecithin und Wasser umfasst.

**7.** Verwendung eines Lecithins nach dem vorstehenden Anspruch, wobei die Zusammensetzung nur Lecithin und Wasser umfasst und das Lecithin in einer Konzentration von gleich oder größer als 0,5 Gramm Lecithin pro Liter Wasser vorliegt, vorzugsweise in einer Konzentration größer als 1,1 Gramm Lecithin pro Liter Wasser.

**8.** Verwendung eines Lecithins nach Anspruch 5, wobei die Zusammensetzung Lecithin in einer Konzentration von gleich oder größer als 0,5 Gramm Lecithin pro Liter Wasser umfasst, vorzugsweise in einer Konzentration größer als 1,1 Gramm Lecithin pro Liter Wasser.

**9.** Verwendung nach Anspruch 1, wobei das Lecithin ausgewählt ist aus Sojalecithin, Sonnenblumenlecithin, Rapslecithin, Baumwolllecithin, Eilecithin und Mischungen davon.

**10.** Verwendung nach Anspruch 1, wobei die Arthropoden ausgewählt sind aus Insekten und Arachniden.

**11.** Verwendung nach Anspruch 10, wobei die Arachniden Milben sind.

**12.** Verwendung nach Anspruch 1, wobei die Arthropoden ausgewählt sind aus red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca* spp), aphid (*Macrosyphum euphorbiae*), aphid (*Myzus persicae*), aphid (*Aphis gossypii*), aphid (*Aphis fabae*), *Aulacartun solani* und *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*) und pea leaf miner (*Liriomyza huidobrensis*).

**13.** Eine feste Formulierung aus entfettetem Lecithin für die landwirtschaftliche Verwendung, umfassend Lecithin als - Pulver oder Granulat in einer Menge zwischen 80 Gew.-% und 90 Gew.-% bezogen auf das Gesamtgewicht der Formulierung, - begleitet von: - einer oder mehreren inerten Substanzen, wobei die inerten Substanzen ausgewählt sind aus Monokaliumphosphat, Monoammoniumphosphat, Ton, Talkum, Kaliumnitrat, Ammoniumsulfat, Aminosäuren, Peptiden, Proteinen, Carbonsäuren, Glutamat, Acetaten, Humaten, Kaliumcarbonat, Kaliumsorbat, Kaliummalat, Citrullinmalat, Harnstoff, Kaliumchlorid, Oxalat, Zeolith, Alginaten, Kieselgur, Xanthan, Gummi arabicum, Methylcellulose, Agarose, Acrylamid, Lignin, Pektin, Lignosulfonaten, Molybdaten, Biammoniumphosphat, Glimmer, Kaolin, Fructose, Saccharose, Chitosan, Calciumhydroxid, Quarzsand, Natriumhydrogencarbonat, und - einer oder mehreren aktiven Substanzen ausgewählt aus Abamectin und Oxalsäure.

**14.** Eine flüssige Zusammensetzung, die mindestens umfasst: - reines Lecithinpulver oder Lecithinpulver, gemischt mit einer oder mehreren inerten Substanzen, ausgewählt aus Monokaliumphosphat, Monoammoniumphosphat, Ton, Talkum, Kaliumnitrat, Ammoniumsulfat, Aminosäuren, Peptiden, Proteinen, Carbonsäuren, Glutamaten, Acetaten, Humaten, Kaliumcarbonat, Kaliumsorbat, Kaliummalat, Citrullinmalat, Harnstoff, Kaliumchlorid, Oxalat, Zeolith, Alginaten, Kieselgur, Xanthan, Gummi arabicum, Methylcellulose, Agarose, Acrylamid, Lignin, Pektin, Lignosulfonaten, Molybdaten, Biammoniumphosphat, Glimmer, Kaolin, Fructose, Saccharose, Chitosan, Calciumhydroxid, Quarzsand, Natriumhydrogencarbonat, und umfasst eine oder mehrere aktive Substanzen, ausgewählt aus Abamectin und Oxalsäure, - und Wasser, gebrauchsfertig als Spray, wobei das Lecithin in einer Konzentration zwischen 0,5 g/L und 30 g/L vorliegt, vorzugsweise zwischen 1,1 g/L und 10 g/L.

**15.** Flüssige Zusammensetzung nach Anspruch 14, wobei Lecithin ausgewählt ist aus Sojalecithin, Sonnenblumenlecithin, Rapslecithin, Baumwolllecithin, Eilecithin und Mischungen davon.

**16.** Nichttherapeutische Verwendung der in Anspruch 14 oder 15 definierten flüssigen Zusammensetzung als Biozide gegen Arthropodenarten, vorzugsweise Insekten und Arachniden.

**17.** Verwendung nach dem vorstehenden Anspruch, wobei die Arachniden Milben sind.

**18.** Verwendung nach Anspruch 17, wobei die Arthropoden ausgewählt sind aus red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca* spp), aphid (*Macrosyphum euphorbiae*), aphid (*Myzus persicae*), aphid (*Aphis gossypii*), aphid (*Aphis fabae*), *Aulacartun solani* und *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*) und pea leaf miner (*Liriomyza huidobrensis*).

**Revendications**

**1.** Utilisation non thérapeutique d'une lécithine comme biocide contre des espèces d'arthropodes, la lécithine étant appliquée sous forme d'une composition liquide en spray.

**2.** Utilisation selon la revendication 1, la lécithine étant une lécithine déshuilée sous forme de poudre ou de granulés.

**3.** Utilisation d'une lécithine selon la revendication 1 ou 2, la composition liquide comprenant une formulation solide de lécithine déshuilée et la lécithine déshuilée étant une lécithine sous forme de poudre ou de granulés.

**4.** Utilisation d'une lécithine selon la revendication 3, ladite formulation comprenant de la lécithine déshuilée - pure, ou - mélangée avec : - au moins une substance inerte, les substances inertes étant choisies parmi phosphate monopotassique, phosphate monoammonique, argile, talc, nitrate de potassium, sulfate d'ammonium, acides aminés, peptides, protéines, acides carboxyliques, glutamate, acétates, humates, carbonate de potassium, sorbate de potassium, malate de potassium, malate de citrulline, urée, chlorure de potassium, oxalate, zéolithe, alginates, terre de diatomées, gomme xanthane, gomme arabique, méthylcellulose, agarose, acrylamide, lignine, pectine, lignosulfonates, molybdates, phosphate biammonium, mica, kaolin, fructose, saccharose, chitosane, hydroxyde de calcium, sable de quartz, bicarbonate de sodium, - une substance active choisie parmi l'abamectine et l'acide oxalique, - ou des combinaisons de celles-ci.

**5.** Utilisation d'une lécithine selon la revendication 3 ou 4, ladite formulation comprenant de la lécithine déshuilée - sous forme de poudre ou de granulés - en une quantité d'au moins 50 % en poids du poids total de la formulation.

**6.** Utilisation d'une lécithine selon la revendication 1 ou 2, la composition liquide comprenant au moins de la lécithine et de l'eau.

**7.** Utilisation d'une lécithine selon la revendication précédente, ladite composition comprenant seulement de la lécithine et de l'eau, la lécithine étant présente à une concentration égale ou supérieure à 0,5 gramme de lécithine par litre d'eau, de préférence à une concentration supérieure à 1,1 gramme de lécithine par litre d'eau.

**8.** Utilisation d'une lécithine selon la revendication 5, la composition comprenant de la lécithine à une concentration égale ou supérieure à 0,5 gramme de lécithine par litre d'eau, de préférence à une concentration supérieure à 1,1 gramme de lécithine par litre d'eau.

**9.** Utilisation selon la revendication 1, la lécithine étant choisie parmi lécithine de soja, lécithine de tournesol, lécithine de colza, lécithine de coton, lécithine d'œuf et leurs mélanges.

**10.** Utilisation selon la revendication 1, les arthropodes étant choisis parmi les insectes et les arachnides.

**11.** Utilisation selon la revendication 10, les arachnides étant des acariens.

**12.** Utilisation selon la revendication 1, les arthropodes étant choisis parmi red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca* spp), aphid (*Macrosyphum euphorbiae*), aphid (*Myzus persicae*), aphid (*Aphis gossypii*), aphid (*Aphis fabae*), *Aulacartun solani* et *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*) et pea leaf miner (*Liriomyza huidobrensis*).

**13.** Formulation solide de lécithine déshuilée pour usage agricole, comprenant la lécithine : - sous forme de poudre ou de granulés en une quantité comprise entre 80 % et 90 % en poids par rapport au poids total de la formulation, - accompagnée de : - une ou plusieurs substances inertes, les substances inertes étant choisies parmi phosphate monopotassique, phosphate monoammonique, argile, talc, nitrate de potassium, sulfate d'ammonium, acides aminés, peptides, protéines, acides carboxyliques, glutamate, acétates, humates, carbonate de potassium, sorbate de potassium, malate de potassium, malate de citrulline, urée, chlorure de potassium, oxalate, zéolithe, alginates, terre de diatomées, gomme xanthane, gomme arabique, méthylcellulose, agarose, acrylamide, lignine, pectine, lignosulfonates, molybdates, phosphate biammonium, mica, kaolin, fructose, saccharose, chitosane, hydroxyde de calcium, sable de quartz, bicarbonate de sodium, et - une ou plusieurs substances actives choisies parmi l'abamectine et l'acide oxalique.

**14.** Une composition liquide comprenant au moins : - de la poudre de lécithine pure ou de la poudre de lécithine mélangée à une ou plusieurs substances inertes choisies parmi phosphate monopotassique, phosphate monoammonique, argile, talc, nitrate de potassium, sulfate d'ammonium, acides aminés, peptides, protéines, acides carboxyliques, glutamates, acétates, humates, carbonate de potassium, sorbate de potassium, malate de potassium, malate de citrulline, urée, chlorure de potassium, oxalate, zéolithe, alginates, terre de diatomées, gomme xanthane, gomme arabique, méthylcellulose, agarose, acrylamide, lignine, pectine, lignosulfonates, molybdates, phosphate biammonium, mica, kaolin, fructose, saccharose, chitosane, hydroxyde de calcium, sable de quartz, bicarbonate de sodium, et comprenant une ou plusieurs substances actives choisies parmi l'abamectine et l'acide oxalique, - et de l'eau, prête à être utilisée en spray, dans laquelle la lécithine est présente à une concentration comprise entre 0,5 g/L et 30 g/L, de préférence entre 1,1 g/L et 10 g/L.

**15.** Composition liquide selon la revendication 14, la lécithine étant choisie parmi lécithine de soja, lécithine de tournesol, lécithine de colza, lécithine de coton, lécithine d'œuf et leurs mélanges.

**16.** Utilisation non thérapeutique de la composition liquide définie dans la revendication 14 ou 15 comme biocide contre des espèces d'arthropodes, de préférence des insectes et des arachnides.

**17.** Utilisation selon la revendication précédente, les arachnides étant des acariens.

**18.** Utilisation selon la revendication 17, les arthropodes étant choisis parmi red spider mite (*Tetranychus urticae*), red spider mite (*Tetranychus evansii*), tomato russet mite (*Aculops lycopersici*), broad mite (*Polyphagotarsonemus latus*), thrips (*Frankliniella occidentalis*), silverleaf whitefly (*Bemisia tabaci*), green mosquito (*Empoasca* spp), aphid (*Macrosyphum euphorbiae*), aphid (*Myzus persicae*), aphid (*Aphis gossypii*), aphid (*Aphis fabae*), *Aulacartun solani* et *Creontiades pallidus,* glasshouse whitefly (*Trialeurodes vaporariorum*), medfly (*Ceratitis capitata*), tomato leafminer (*Tuta absoluta*), cottony cushion scale (*Icerya purchasi*), solanum mealybug (*Phenacoccus solani*), southern green shield bug (*Nezara viridula*) et pea leaf miner (*Liriomyza huidobrensis*).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 441813 A

**Non-patent literature cited in the description**

- Detergents and Soaps as Tools for IPM in Agriculture. **T. S. TOMISLAV**. Integrated Pest Management (IPM): Environmentally Sound Pest Management. 2016
- **JASON LOGSDON**. *How to Use Soy Lecithin*, 01 January 2016, 1-19, https ://www .amazingfoodma-deeasy .corn/info/modernist-ingredients/ more/soy-lecithin
- **HENDERSON, C.F.** ; **E. W. TILTON**. Tests with acaricides against the brow wheat mite. *J. Econ. Entomol.*, 1955, vol. 48, 157-161
- Food Chemicals Codex. National Academy Press, 1996, 220-221
- **SCHNEIDER, M.** Lecithins: Sources, Manufacture, & Uses. American Oil Chemists' Society, 1989, 109-130
- **SCHMIDT, J. C.** ; **ORTHOEFER, F. T.** Lecithins. American Oil Chemists' Society, 1985, 183-202
- Safety of the Food Chain, Pesticides and Biocides. *SANCO/12798/2014- rev. 2*, 30 March 2015